# EUROPEAN PATENT SPECIFICATION

(11) **EP 4 181 283 B1**
(45) Date of publication and mention of the grant of the patent: **29.04.2026**
(21) Application number: 22771741.0
(22) Date of filing: 15.03.2022
(51) Int. Cl.: H01M 50/204, H01M 50/211, H01M 50/209

(54) **CELL ALIGNMENT DEVICE COMPRISING A CELL MOUNTING JIG FOR PREVENTING DAMAGE TO APPEARANCE OF BATTERY CELL AND CELL MOUNTING METHOD**
ZELLENAUSRICHTUNGSVORRICHTUNG MIT ZELLENMONTAGEVORRICHTUNG ZUR VERHINDERUNG VON SCHÄDEN AN DER BATTERIEZELLENERSCHEINUNG UND ZELLENMONTAGEVERFAHREN
APPAREIL D'ALIGNEMENT DE PILES COMPRENANT UN GABARIT DE MONTAGE DE PILES DESTINÉ À EMPÊCHER D'ENDOMMAGER L'APPARENCE D'ÉLÉMENTS DE BATTERIE ET PROCÉDÉ DE MONTAGE DE PILES

(30) Priority: 16.03.2021 KR 20210034218
(43) Date of publication of application: 17.05.2023
(73) Proprietor: LG Energy Solution, Ltd., Seoul 07335 (KR)
(72) Inventor: OH, Jong-Kyun, Daejeon 34122 (KR); JEONG, Woo-Seung, Daejeon 34122 (KR); LEE, Cheol, Daejeon 34122 (KR)
(74) Representative: Hoffmann Eitle
(86) International application number: PCT/KR2022/003630
(87) International publication number: WO 2022/197075

(56) References cited:
- WO-A1-2021/040188
- KR-A- 20120 117 270
- KR-A- 20160 002 174
- KR-A- 20170 100 994
- KR-A- 20200 006 412
- KR-B1- 101 260 470
- US-A1- 2019 222 033
- US-B2- 8 790 810

## Description

### TECHNICAL FIELD

The present disclosure relates to a device used in a battery module manufacturing process, and more particularly, to a cell alignment device comprising a cell mounting jig for mounting and aligning battery cells, and a cell mounting method.

### BACKGROUND ART

In general, as opposed to disposable primary batteries, secondary batteries can be recharged, and recently, high output secondary batteries using nonaqueous electrolytes of high energy density are being developed. Small electron devices designed to be held and used in hands such as mobile phones, laptop computers or camcorders use at least one secondary battery cells as an energy source, and medium- and large-scale devices requiring high output and high capacity power such as electric vehicles use, as an energy source, battery packs fabricated by making a battery module including a few tens to a few hundreds of secondary battery cells connected in series and/or in parallel and connecting battery modules in series and/or in parallel.

The secondary battery cells may be classified into prismatic batteries, cylindrical batteries and pouch type batteries according to the case shape. Here, the prismatic or pouch type secondary batteries are stacked and received in a module case with high density to make a battery module, thereby increasing the energy density of the battery module. The battery module including prismatic or pouch type secondary batteries undergoes a process of forming the cell stack and receiving the cell stack in the module case.

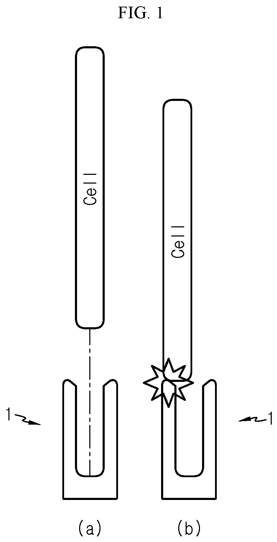

Meanwhile, in the preparation step for forming the cell stack, there is a process of vertically inserting the secondary battery cell standing upright into the cell mounting jig as shown in (a) of FIG. 1. However, in this process, interference often occurs between the secondary battery cell and the cell mounting jig 1 due to thickness differences of the secondary battery cell, position changes of the cell mounting jig or position errors of a cell transporter as shown in (b) of FIG. 1, causing damage to the appearance of the secondary battery cell. In this instance, when the appearance of the secondary battery cell is severely damaged, electrolyte leaks or insulation failure may occur, and accordingly there is a need for a solution.

KR 2016 0002174 A concerns a pressing tray. The pressing tray includes a frame accommodating a plurality of battery cells disposed in the interior space, and a plurality of pressing blocks movably disposed between adjacent battery cells to press the battery cells by moving in a horizontal direction, wherein an inclined surface is formed on an upper portion of the pressing block in a direction in which the battery cells are inserted.

### DISCLOSURE

### Technical Problem

The present disclosure is designed to solve the above-described problem, and therefore the present disclosure is directed to providing an improved cell alignment device comprising a cell mounting jig, and a cell mounting method for preventing damage to the appearance of a battery cell during a cell insertion process.

These and other objects and advantages of the present disclosure may be understood by the following description, and will be apparent from the embodiments of the present disclosure. In addition, it will be readily appreciated that the objects and advantages of the present disclosure may be realized by the means set forth in the appended claims and a combination thereof.

### Technical Solution

According to the present invention, there is provided a cell alignment device comprising a cell mounting jig for prismatic or pouch type secondary batteries, configured to support a cell during stack forming, which is defined in claim 1. The cell mounting jig includes a base; a first support vertically extended from a side of the base; and a second support vertically extended from an opposite side of the base spaced a predetermined distance apart from the first support, the first support and the second support facing each other, wherein the second support is extended higher than the first support.

The cell alignment device includes a cell support unit including a pair of cell mounting jigs arranged spaced a predetermined distance apart from each other in a first direction; and a jig connection member connecting the pair of cell mounting jigs together; and a jig transfer unit connected to each cell mounting jig and extended in a second direction perpendicular to the first direction, wherein at least one cell support unit is provided on the jig transfer unit.

A distance between the first support and the second support may correspond to a thickness of a battery cell to be inserted therebetween.

Each of the first support and the second support may be thinner at an upper portion than a lower portion, and a guide portion having a gradual decrease in thickness may be formed between the upper portion and the lower portion.

The second support may include a first part integrally formed with the base, and at least one second part configured to detachably attach to an upper portion of the first part.

The base may include a joint portion configured to be coupled to an end of the jig connection member; and a slide portion configured to slidably move along the jig transfer unit.

The joint portion may have a coupling hole formed in the first direction, into which the end of the jig connection member is inserted, and the end of the jig connection member may be inserted into the coupling hole and fixed to the joint portion by a fastening member.

The jig connection member may be rod-shaped and have two ends fixed and coupled to the pair of cell mounting jigs, and at least one jig connection member may be provided.

According to another aspect of the present invention, there is provided a method for mounting a battery cell in the above cell alignment device, as defined in claim 8. The method includes a cell input preparation step of transporting a battery cell to an area above the cell support unit; a cell primary downward movement step of moving down the battery cell to a location at which a lower end of the battery cell is higher than the first support and lower than the second support; a cell horizontal movement step of horizontally moving the battery cell to an inner surface of the second support; and a cell secondary downward movement step of moving down the battery cell to insert the battery cell between the first support and the second support.

The method for mounting a battery cell may further include a cell dense arrangement step of bringing each cell support unit into close contact with each other after mounting the battery cell in each cell support unit of the cell alignment device.

### Advantageous Effects

According to the present disclosure, it is possible to fundamentally prevent damage to the appearance of the battery cell that may occur when inserting the battery cell into the cell mounting jig.

Additionally, the present disclosure is configured to horizontally move the battery cell until the battery cell reaches the inner surface of the second support of the cell mounting jig and then vertically move the battery cell to the space between the first support and the second support to mount the battery cell in the cell mounting jig, thereby achieving an easy and stable insertion process of the battery cell even in the presence of errors in the initial loading position of the cell transporter or position changes of the cell mounting jig.

The present disclosure may have a variety of other effects, and the other effects of the present disclosure can be understood by the following description, and will be made clearer by the embodiments of the present disclosure.

### DESCRIPTION OF DRAWINGS

FIG. 1 is a schematic diagram showing a cell mounting jig and a problem in a cell insertion process according to the conventional art of the present disclosure.
FIG. 2 is a schematic perspective view of a cell alignment device according to an embodiment of the present disclosure.
FIG. 3 is a schematic perspective view of a cell mounting jig according to an embodiment of the present disclosure.
FIG. 4 is a front view of a battery cell mounted in a cell alignment device according to an embodiment of the present disclosure.
FIGS. 5 to 7 are diagrams showing a cell insertion process by a cell mounting method according to an embodiment of the present disclosure.
FIG. 8 is a perspective view of battery cells mounted in a cell alignment device according to an embodiment of the present disclosure.
FIG. 9 is a diagram showing battery cells arranged close to each other by moving cell support units in FIG. 8.
FIG. 10 is a diagram showing a cell mounting jig according to another embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just an exemplary embodiment of the present disclosure, but not intended to fully describe the technical aspects of the present disclosure, so it should be understood that a variety of other equivalents and modifications could have been made thereto at the time that the application was filed, within the scope of the appended claims. That is, the invention is defined by the appended claims. Additionally, in describing the present disclosure, when it is determined that a certain detailed description of relevant known elements or functions may obscure the subject matter of the present disclosure, the detailed description is omitted.

The embodiments of the present disclosure are provided to describe the present disclosure for those skilled in the art thoroughly and completely and the shape and size of the elements in the drawings may be exaggerated, omitted or schematically shown for clarity. Accordingly, the size or proportion of each element does not necessarily reflect the actual size or proportion.

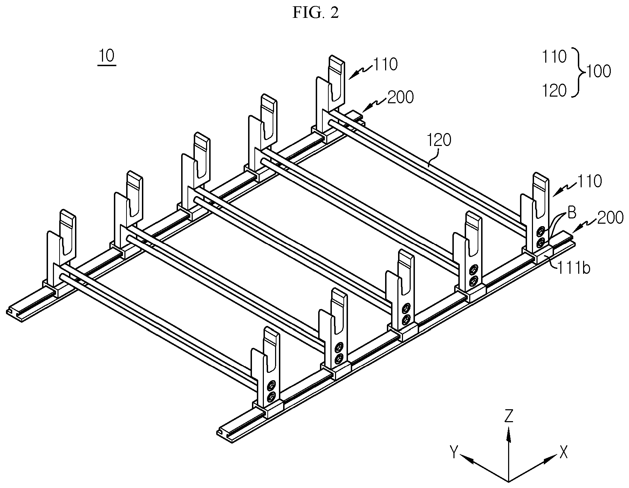

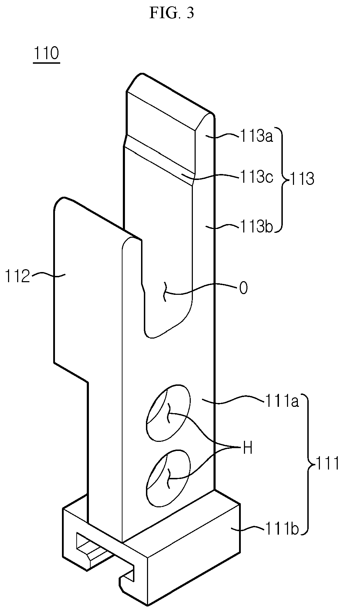

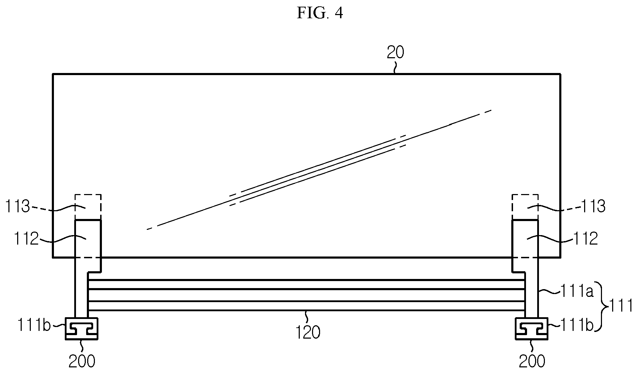

FIG. 2 is a schematic perspective view of a cell alignment device according to an embodiment of the present disclosure, FIG. 3 is a schematic perspective view of a cell mounting jig according to an embodiment of the present disclosure, and FIG. 4 is a front view of the battery cell mounted in the cell alignment device according to an embodiment of the present disclosure.

Referring to FIGS. 2 to 4, the cell alignment device 10 according to an embodiment of the present disclosure includes at least one cell support unit 100 and a jig transfer unit 200 to move the cell support unit 100.

The cell support unit 100 includes a pair of cell mounting jigs 110 and a jig connection member 120.

The pair of cell mounting jigs 110 may be configured to support a battery cell 20 such that a wide surface stands perpendicular to the ground, and the jig connection member 120 may be configured to hold the pair of cell mounting jigs 110 to move them together without change in relative position between them.

Here, the battery cell 20 refers to a prismatic or a pouch type battery cell 20.

To begin with, describing the cell mounting jig 110, as shown in FIG. 3, the cell mounting jig 110 may include a base 111, a first vertical plate portion and a second vertical plate portion.

The base 111 may include an upper joint portion 111a and a lower slide portion 111b. The joint portion 111a is where the jig connection member 120 is coupled, and has a coupling hole H in a first direction (Y axis direction) to fix the jig connection member 120 by inserting the end of the jig connection member 120 into the coupling hole H.

A fastening member B such as a bolt may be added to firmly fix the jig connection member 120. In other words, to fix the jig connection member 120 more firmly, a screw groove may be formed at the end of the jig connection member 120 for bolt screw coupling and aligned with the coupling hole H of the joint portion 111a, and a bolt may be inserted into the screw groove from the outside of the coupling hole H to bolt the jig connection member 120 to the joint portion 111a as shown in FIG. 3.

The slide portion 111b is connected to the jig transfer unit 200 to move the cell mounting jig 110 along a second direction (X axis direction). In this embodiment, the slide portion 111b may be formed in the shape of a block that partially covers the jig transfer unit 200 to slidably move without running off the jig transfer unit 200 of a rail structure. Although not shown, a bearing may be added to the inner side of the slide portion 111b to allow the slide portion 111b to smoothly move.

Additionally, although this embodiment shows the upper joint portion 111a and the slide portion 111b integrally formed, the upper joint portion 111a may be separated from the slide portion 111b.

A first support 112 and a second support 113 are configured to vertically insert and place the battery cell 20 in a cell mounting space O between them.

To this end, the first support 112 is vertically extended at one side on top of the base 111, the second support 113 is vertically extended at the other side on top of the base 111 spaced a predetermined distance apart from the first support 112, and the first support 112 and the second support 113 face each other.

Preferably, the distance between the first support 112 and the second support 113 may correspond to the thickness of the battery cell 20 to mount, in order to prevent the battery cell 20 from tilting when mounting the battery cell 20.

The second support 113 has a larger height than the first support 112. That is, the second support 113 may be asymmetrically higher than the first support 112.

Since the second support 113 has a larger height than the first support 112, it is possible to prevent damage to the appearance of the battery cell 20 during the cell insertion. Its detailed description will be provided below.

The first support 112 and the second support 113 may be thinner at an upper portion 113a than a lower portion 113b. When the thickness of the upper portion 113a is smaller than the thickness of the lower portion 113b, it is possible to ensure a larger upper space for entry of the battery cell 20 into the cell mounting space O. Accordingly, it is easy to move down the battery cell 20 even though there is a small error in position between a cell transporter (not shown) and the cell mounting jig 110 when moving down the battery cell 20.

The second support 113 may further include a guide portion 113c having a gradual decrease in thickness between the upper portion 113a and the lower portion 113b. In the same way as the second support 113, the first support 112 may include a guide portion.

In case that there is a step between the upper portion 113a and the lower portion 113b and there is no guide portion 113c, there may be interference between the lower end of the battery cell 20 and the step when moving down the battery cell 20. In this embodiment, to avoid this problem, the guide portion 113c is added between the upper portion 113a and the lower portion 113b. Accordingly, when moving down the battery cell 20, the battery cell 20 may move down along the slope of the guide portion 113c and be safely inserted into the cell mounting space O.

To stably support the battery cell 20, in this embodiment, two cell mounting jigs 110 are used as shown in FIG. 4. The two cell mounting jigs 110 are spaced a predetermined distance apart from each other in the first direction (Y axis direction) and integrally connected by the jig connection member 120.

The jig connection member 120 may be a rod made of a metal or a nonmetal having high mechanical strength. The rod shaped jig connection member 120 may have two ends fixed and coupled to the pair of cell mounting jigs 110 as described above.

In other words, as shown in FIGS. 2 and 4, the left cell mounting jig 110 and the right cell mounting jig 110 are connected with two rod shaped jig connection members 120. Accordingly, the left cell mounting jig 110 and the right cell mounting jig 110 are always placed on the same axis and move together in the second direction (X axis direction).

For example, in case there is no jig connection member 120, there is inconvenience of having to adjust the position of the left cell mounting jig 110 and the right cell mounting jig 110 each time before inserting the battery cell 20, but when the jig connection member 120 is applied as in this embodiment, it is possible to eliminate the inconvenience. Additionally, in case that the left/right cell mounting jigs 110 do not move together when moving the cell mounting jig 110 with the battery cell 20 mounted therein, a torsional load may be applied to the battery cell 20. However, in this embodiment, the left/right cell mounting jigs 110 are configured to move together to avoid the above-described problem.

The jig transfer unit 200 may be configured to move each cell support unit 100 along the second direction, and may be provided in the shape of a pair of rails extended in the second direction.

As shown in FIG. 2, when the slide portion 111b of each cell mounting jig 110 is connected to the jig transfer unit 200, each cell support unit 100 may slidably move along the second direction (X axis direction). Although not shown, for example, a mechanical connection combination may be added between a servomotor and the cell support unit 100 to transfer the power of the servomotor and the movement of each cell support unit 100 may be controlled.

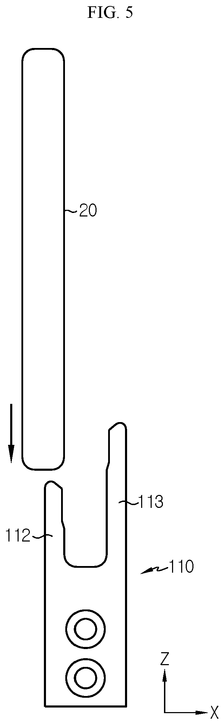

FIGS. 5 to 7 are diagrams showing a cell insertion process by a cell mounting method according to an embodiment of the present disclosure.

Subsequently, the cell mounting method according to an embodiment of the present disclosure will be described with reference to FIGS. 5 to 7.

The cell mounting method according to an embodiment of the present disclosure may include a cell input preparation step, a cell primary downward movement step, a cell horizontal movement step and a cell secondary downward movement step.

The cell input preparation step is a step of transporting the battery cell 20 to an area above the cell support unit 100 using the cell transporter. Here, the cell transporter may refer to a robotic arm or a gripper capable of clamping two surfaces of the battery cell 20 and moving in X-Y-Z axes. Additionally, the area above the cell support unit 100 refers to a higher location than the cell mounting jig 110.

Subsequently, the cell primary downward movement step is a step of moving down the battery cell 20 (in -Z axis direction) to a location at which the lower end of the battery cell 20 is higher than the first support 112 of the cell mounting jig 110 and lower than the second support 113 as shown in FIG. 5.

Preferably, in the cell primary downward movement step, the battery cell 20 is moved down from the front side of the cell mounting jig 110, that is to say, from above the first support 112 to a height at which the lower end of the battery cell 20 does not touch the upper end of the first support 112 and is lower than the upper end of the second support 113.

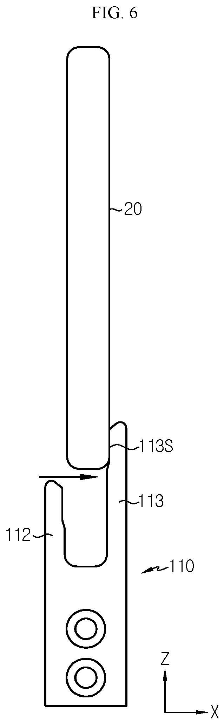

Subsequently, the cell horizontal movement step is a step of horizontally moving the battery cell 20 (in +X axis direction) to the inner surface 113S of the second support 113 as shown in FIG. 6.

After the cell horizontal movement step is performed, the battery cell 20 is placed at a location at which there is no likelihood that the lower end of the battery cell 20 collides with the upper end of the first support 112 and the upper end of the second support 113 in the secondary downward movement.

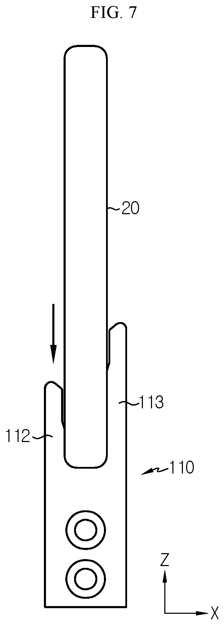

Subsequently, the cell secondary downward movement step is a step of moving down the battery cell 20 (in -Z axis direction) and mounting between the first support 112 and the second support 113 as shown in FIG. 7.

After the cell secondary downward movement step is performed, the battery cell 20 may be vertically placed in the cell mounting space O surrounded by the base 111, the first support 112 and the second support 113 by partial interference fit.

As described above, according to the configuration of the cell mounting jig 110 and the cell mounting method according to this embodiment, it is possible to adjust the position of the battery cell 20 to avoid collisions between the battery cell 20 and the cell mounting jig 110 before the secondary downward movement of the battery cell 20. Accordingly, even though there is an error between the initial loading position of the cell transporter and the position of the cell mounting jig 110, it is possible to mount the battery cell 20 in the cell mounting jig 110 without damage to the battery cell 20.

In addition, the method for mounting the battery cell 20 according to this embodiment may further include a cell dense arrangement step.

The cell dense arrangement step is a step of bringing each cell support unit 100 into close contact with each other to densely arrange the battery cells 20 after mounting the battery cell 20 in each cell support unit 100 of the cell alignment device 10.

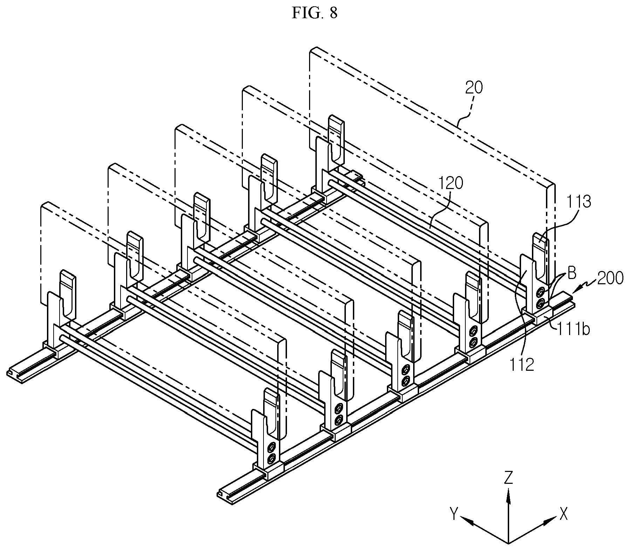

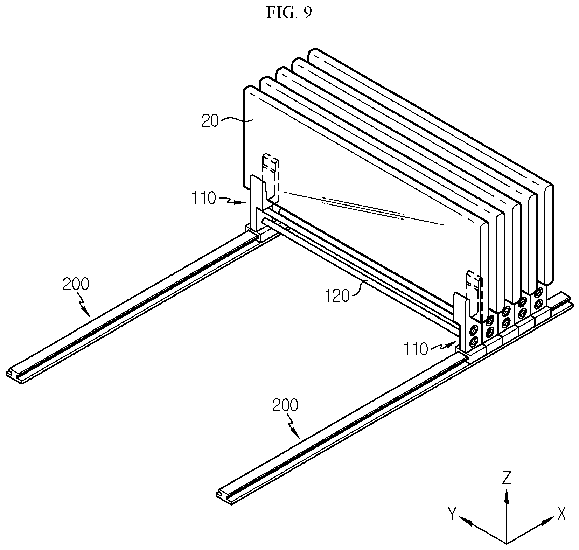

FIG. 8 is a perspective view of the battery cells 20 mounted in the cell alignment device 10 according to an embodiment of the present disclosure, and FIG. 9 is a diagram showing the battery cells 20 densely arranged by moving the cell support units 100 in FIG. 8.

For example, as shown in FIG. 8, five cell support units 100 may be arranged spaced a predetermined distance apart from each other on the jig transfer unit 200, and each one battery cell 20 may be mounted for each cell support unit 100 in the reverse order from the last cell support unit 100 along the second direction (X axis direction). In this instance, the battery cell 20 may be mounted in the cell mounting jig 110 of each cell support unit 100 by iteratively performing the above-described process.

The cell support units 100 spaced apart from each other for cell insertion may be moved by the jig transfer unit 200 to bring them into close contact with each other in the second direction as shown in FIG. 9. Accordingly, the battery cells 20 spaced apart from each other are densely arranged to form a group of stacks.

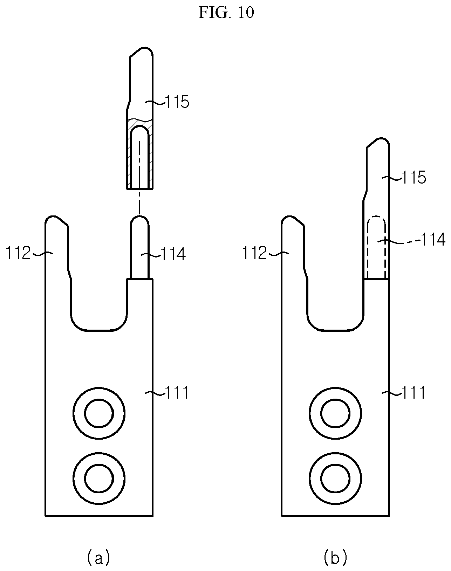

FIG. 10 is a diagram showing a cell mounting jig according to another embodiment of the present disclosure.

Subsequently, the cell mounting jig according to another embodiment of the present disclosure will be described with reference to FIG. 10.

The same reference number as the previous drawings indicates the same element, and an overlapping description of the same element is omitted and it will be briefly described based on different(s) between this embodiment and the above-described embodiment.

The second support 113 of the cell mounting jig 110 according to another embodiment of the present disclosure may include a first part 114 integrally formed with the base 111, and at least one second part 115 configured to detachably attach to the upper portion of the first part 114.

As shown in FIG. 10, the cell mounting jig 110 may include the second support 113 having a larger height than the first support 112 when the second part 115 is mounted in the first part 114.

Although not shown, the second part 115 may be provided with different heights. For example, the height of the second support 113 may be increased or decreased by preparing a plurality of second parts 115 whose heights are different from that of the second part 115 of FIG. 10 and mounting one of the second parts 115 in the first part 114. The height of the first support 112 may be also increased or decreased in the same way as the second support 113.

That is, another embodiment of the present disclosure may be characterized in that the height of the second support 113 is adjusted by selecting the second part 115 of a suitable height for each size of the battery cell 20 and mounting it in the first part 114. Accordingly, in case that the battery cells 20 have different widths (or heights when they stand upright) but the same thickness, the cell mounting jig of this embodiment may be compatibly used to support each battery cell by inserting the second part 115 of a suitable height for each battery cell into the first part 114 and adjusting the height of the second support 113.

While the present disclosure has been hereinabove described with regard to a limited number of embodiments and drawings, the present disclosure is not limited thereto and a variety of modifications and changes may be made by those skilled in the art within the scope of the appended claims.

The terms indicating directions as used herein such as upper, lower, left and right are used for convenience of description only, and it is obvious to those skilled in the art that the term may change depending on the position of the stated element or an observer.

## Claims

1. A cell alignment device (10) comprising a cell mounting jig (110) for prismatic or pouch type secondary batteries, configured to support a cell during stack forming, the cell mounting jig (110), comprising:
a base (111);
a first support (112) vertically extended from a side of the base (111); and
a second support (113) vertically extended from an opposite side of the base (111) spaced a predetermined distance apart from the first support (112), the first support (112) and the second support (113) facing each other,
wherein the second support (113) is extended higher than the first support (112),
the cell alignment device (10) comprising:
a cell support unit (100) including a pair of cell mounting jigs (110) arranged spaced a predetermined distance apart from each other in a first direction; and a jig connection member (120) connecting the pair of cell mounting jigs (110) together; and
a jig transfer unit (200) of a rail structure connected to each cell mounting jig (110) and extended in a second direction perpendicular to the first direction,
wherein at least one cell support unit (100) is provided on the jig transfer unit (200).

2. The cell alignment device (10) according to claim 1, wherein a distance between the first support (112) and the second support (113) corresponds to a thickness of a battery cell (20) to be inserted therebetween.

3. The cell alignment device (10) according to claim 1, wherein each of the first support (112) and the second support (113) is thinner at an upper portion (113a) than a lower portion (113b), and
a guide portion (113c) having a gradual decrease in thickness is formed between the upper portion (113a) and the lower portion (113b).

4. The cell alignment device (10) according to claim 1, wherein the second support (113) includes a first part (114) integrally formed with the base (111), and at least one second part (115) configured to detachably attach to an upper portion of the first part (114).

5. The cell alignment device (10) according to claim 1, wherein the base (111) includes:
a joint portion (111a) configured to be coupled to an end of the jig connection member (120); and
a slide portion (111b) configured to slidably move along the jig transfer unit (200).

6. The cell alignment device (10) according to claim 5, wherein the joint portion (111a) has a coupling hole (H) formed in the first direction, into which the end of the jig connection member (120) is inserted, and
the end of the jig connection member (120) is inserted into the coupling hole (H) and fixed to the joint portion (111a) by a fastening member (B).

7. The cell alignment device (10) according to claim 1, wherein the jig connection member (120) is rod-shaped and has two ends fixed and coupled to the pair of cell mounting jigs (110), and at least one jig connection member (120) is provided.

8. A method for mounting a battery cell (20) in the cell alignment device (10) according to claim 1, the method comprising:
a cell input preparation step of transporting a battery cell (20) to an area above the cell support unit (100);
a cell primary downward movement step of moving down the battery cell (20) to a location at which a lower end of the battery cell (20) is higher than the first support (112) and lower than the second support (113);
a cell horizontal movement step of horizontally moving the battery cell (20) to an inner surface (113S) of the second support (113); and
a cell secondary downward movement step of moving down the battery cell (20) to mount the battery cell (20) between the first support (112) and the second support (113).

9. The method for mounting a battery cell (20) according to claim 8, further comprising:
a cell dense arrangement step of bringing each cell support unit (100) into close contact with each other after mounting the battery cell (20) in each cell support unit (100) of the cell alignment device (10).

## Patentansprüche

1. Zellenausrichtungsvorrichtung (10), die eine Zellenmontagevorrichtung (110) für prismatische oder Pouch-Typ-Sekundärbatterien umfasst, die so konfiguriert ist, dass sie eine Zelle während Stapelbildung stützt, wobei die Zellenmontagevorrichtung (110) Folgendes umfasst:
eine Basis (111);
eine erste Stütze (112), die sich vertikal von einer Seite der Basis (111) aus erstreckt; und
eine zweite Stütze (113), die sich vertikal von einer gegenüberliegenden Seite der Basis (111) aus erstreckt, in einem vorbestimmten Abstand von der ersten Stütze (112) beabstandet, die erste Stütze (112) und die zweite Stütze (113) einander zugewandt,
wobei die zweite Stütze (113) sich höher als die erste Stütze (112) erstreckt,
die Zellenausrichtungsvorrichtung (10) umfassend:
eine Zellstützeinheit (100) einschließend ein Paar von Zellenmontagevorrichtungen (110), die in einer ersten Richtung in einem vorbestimmten Abstand voneinander beabstandet angeordnet sind; und ein Vorrichtungsverbindungselement (120), das das Paar von Zellenmontagevorrichtungen (110) miteinander verbindet; und
eine Vorrichtungstransfereinheit (200) einer Schienenstruktur, die mit jeder Zellenmontagevorrichtung (110) verbunden ist und sich in einer zweiten Richtung senkrecht zur ersten Richtung erstreckt,
wobei mindestens eine Zellstützeinheit (100) auf der Vorrichtungstransfereinheit (200) bereitgestellt ist.

2. Zellenausrichtungsvorrichtung (10) nach Anspruch 1, wobei ein Abstand zwischen der ersten Stütze (112) und der zweiten Stütze (113) einer Dicke einer dazwischen einzusetzenden Batteriezelle (20) entspricht.

3. Zellenausrichtungsvorrichtung (10) nach Anspruch 1, wobei jede der ersten Stütze (112) und der zweiten Stütze (113) an einem oberen Abschnitt (113a) dünner als an einem unteren Abschnitt (113b) ist, und
ein Führungsabschnitt (113c), der eine allmähliche Abnahme der Dicke aufweist, zwischen dem oberen Abschnitt (113a) und dem unteren Abschnitt (113b) gebildet ist.

4. Zellenausrichtungsvorrichtung (10) nach Anspruch 1, wobei die zweite Stütze (113) einen ersten Teil (114) einschließt, der integral mit der Basis (111) gebildet ist, und mindestens einen zweiten Teil (115), der so konfiguriert ist, dass er lösbar an einem oberen Abschnitt des ersten Teils (H4) angebracht wird.

5. Zellenausrichtungsvorrichtung (10) nach Anspruch 1, wobei die Basis (111) Folgendes einschließt:
einen Kopplungsabschnitt (111a), der so konfiguriert ist, dass er mit einem Ende des Vorrichtungsverbindungselements (120) gekoppelt wird; und
einen Gleitabschnitt (111b), der so konfiguriert ist, dass er sich gleitend entlang der Vorrichtungstransfereinheit (200) bewegt.

6. Zellenausrichtungsvorrichtung (10) nach Anspruch 5, wobei der Kopplungsabschnitt (111a) eine in der ersten Richtung gebildete Kopplungsbohrung (H) aufweist, in die das Ende des Vorrichtungsverbindungselements (120) eingesetzt wird, und
das Ende des Vorrichtungsverbindungselements (120) in die Kopplungsbohrung (H) eingesetzt und durch ein Befestigungselement (B) an dem Kopplungsabschnitt (111a) fixiert ist.

7. Zellenausrichtungsvorrichtung (10) nach Anspruch 1, wobei das Vorrichtungsverbindungselement (120) stabförmig ist und zwei Enden aufweist, die an dem Paar von Zellenmontagevorrichtungen (110) fixiert und gekoppelt sind, und mindestens ein Vorrichtungsverbindungselement (120) bereitgestellt ist.

8. Verfahren zum Montieren einer Batteriezelle (20) in der Zellenausrichtungsvorrichtung (10) nach Anspruch 1, wobei das Verfahren Folgendes umfasst:
einen Zelleingabevorbereitungsschritt des Transportierens einer Batteriezelle (20) zu einem Bereich oberhalb der Zellstützeinheit (100);
einen primären Zellenabwärtsbewegungsschritt des Abwärtsbewegens der Batteriezelle (20) zu einer Position, an der ein unteres Ende der Batteriezelle (20) höher als die erste Stütze (112) und niedriger als die zweite Stütze (113) ist;
einen Zellenhorizontalbewegungsschritt des horizontalen Bewegens der Batteriezelle (20) zu einer Innenfläche (113S) der zweiten Stütze (113); und
einen sekundären Zellenabwärtsbewegungsschritt des Abwärtsbewegens der Batteriezelle (20), um die Batteriezelle (20) zwischen der ersten Stütze (112) und der zweiten Stütze (113) zu montieren.

9. Verfahren zum Montieren einer Batteriezelle (20) nach Anspruch 8, weiter umfassend:
einen Zelldichtanordnungsschritt des engen Inkontaktbringens jeder Zellstützeinheit (100) miteinander nach dem Montieren der Batteriezelle (20) in jeder Zellstützeinheit (100) der Zellenausrichtungsvorrichtung (10).

## Revendications

1. Dispositif d'alignement de piles (10) comprenant un gabarit de montage de pile (110) pour batteries secondaires de type prismatique ou de type pochette, configuré pour supporter une pile durant la formation d'empilement, le gabarit de montage de pile (110) comprenant :
une base (111) ;
un premier support (112) s'étendant verticalement à partir d'un côté de la base (111); et
un second support (113) s'étendant verticalement à partir d'un côté opposé de la base (111) espacé d'une distance prédéterminée du premier support (112), le premier support (112) et le second support (113) faisant face l'un à l'autre,
dans lequel le second support (113) s'étend plus haut que le premier support (112),
le dispositif d'alignement de piles (10) comprenant :
une unité de support de piles (100) incluant une paire de gabarits de montage de pile (110) agencés espacés d'une distance prédéterminée l'un de l'autre dans une première direction ; et un élément de liaison de gabarits (120) reliant ensemble la paire de gabarits de montage de pile (110) ; et
une unité de transfert de gabarit (200) d'une structure de rail reliée à chaque gabarit de montage de pile (110) et s'étendant dans une seconde direction perpendiculaire à la première direction,
dans lequel au moins une unité de support de piles (100) est prévue sur l'unité de transfert de gabarit (200).

2. Dispositif d'alignement de piles (10) selon la revendication 1, dans lequel une distance entre le premier support (112) et le second support (113) correspond à une épaisseur d'un élément de batterie (20) devant être inséré entre ceux-ci.

3. Dispositif d'alignement de piles (10) selon la revendication 1, dans lequel chacun du premier support (112) et du second support (113) est plus mince au niveau d'une portion supérieure (113a) que d'une portion inférieure (113b), et
une portion guide (113c) présentant une diminution graduelle d'épaisseur est formée entre la portion supérieure (113a) et la portion inférieure (113b).

4. Dispositif d'alignement de piles (10) selon la revendication 1, dans lequel le second support (113) inclut une première partie (114) formée d'un seul tenant avec la base (111), et au moins une seconde partie (115) configurée pour se fixer de manière détachable à une portion supérieure de la première partie (114).

5. Dispositif d'alignement de piles (10) selon la revendication 1, dans lequel la base (111) inclut :
une portion de jonction (111a) configurée pour être couplée à une extrémité de l'élément de liaison de gabarits (120) ; et
une portion de coulissement (111b) configurée pour se déplacer de manière coulissante le long de l'unité de transfert de gabarit (200).

6. Dispositif d'alignement de piles (10) selon la revendication 5, dans lequel la portion de jonction (111a) présente un trou de couplage (H) formé dans la première direction, dans lequel l'extrémité de l'élément de liaison de gabarits (120) est insérée, et
l'extrémité de l'élément de liaison de gabarits (120) est insérée dans le trou de couplage (H) et fixée à la portion de jonction (111a) par un élément de fixation (B).

7. Dispositif d'alignement de piles (10) selon la revendication 1, dans lequel l'élément de liaison de gabarits (120) est en forme de tige et présente deux extrémités fixées et couplées à la paire de gabarits de montage de pile (110), et au moins un élément de liaison de gabarits (120) est prévu.

8. Procédé de montage d'un élément de batterie (20) dans le dispositif d'alignement de piles (10) selon la revendication 1, le procédé comprenant :
une étape de préparation d'entrée de pile consistant à transporter un élément de batterie (20) vers une zone au-dessus de l'unité de support de piles (100) ;
une étape de mouvement descendant primaire de pile consistant à déplacer vers le bas l'élément de batterie (20) vers un emplacement au niveau duquel une extrémité inférieure de l'élément de batterie (20) est plus haute que le premier support (112) et plus basse que le second support (113) ;
une étape de mouvement horizontal de pile consistant à déplacer horizontalement l'élément de batterie (20) vers une surface intérieure (113S) du second support (113) ; et
une étape de mouvement descendant secondaire de pile consistant à déplacer vers le bas l'élément de batterie (20) pour faire monter l'élément de batterie (20) entre le premier support (112) et le second support (113).

9. Procédé de montage d'un élément de batterie (20) selon la revendication 8, comprenant en outre :
une étape d'agencement dense de piles consistant à mettre chaque unité de support de piles (100) en contact étroit les unes avec les autres après montage de l'élément de batterie (20) dans chaque unité de support de piles (100) du dispositif d'alignement de piles (10).
